(19) Europäisches Patentamt
European Patent Office
Office européen des brevets

(11) Publication number: **0 046 933**
**B1**

(12) **EUROPEAN PATENT SPECIFICATION**

(45) Date of publication of patent specification: **22.06.88**

(51) Int. Cl.$^4$: **C 22 B 3/00**, C 01 G 51/00, C 07 F 9/30

(21) Application number: **81106471.6**

(22) Date of filing: **20.08.81**

(54) **Extraction process for the selective removal of cobalt (II) from aqueous solutions.**

(30) Priority: **28.08.80 US 182296**

(43) Date of publication of application:
**10.03.82 Bulletin 82/10**

(45) Publication of the grant of the patent:
**22.06.88 Bulletin 88/25**

(84) Designated Contracting States:
**AT BE DE FR GB NL SE**

(56) References cited:
**BE-A- 871 963**
**FR-A-2 263 979**
**FR-A-2 267 380**
**FR-E- 78 138**
**GB-A-1 023 704**
**US-A-3 728 366**
**US-A-3 966 569**

**CHEMICAL ABSTRACTS, vol. 81, 1974, page 778, abstract 180681b, COLUMBUS, OHIO (US). M. MARHOL et al.: "Selective ion exchangers containing phosphorus in their functional groups. I. Sorption and separation of some bivalent and trivalent ions", & J. Radioanal. Chem. 1974,21(1), 177-86**

(73) Proprietor: **CYANAMID CANADA INC.**
**2255 Sheppard Avenue East**
**Willowdale Ontario M2J 4Y5 (CA)**

(72) Inventor: **Rickelton, William Adrew**
**208-6390 Huggins Street**
**Niagara Falls Ontario (CA)**
Inventor: **Robertson, Allan James**
**36 Forster Avenue**
**Thorold Ontario (CA)**
Inventor: **Burley, David Richard**
**652 Beechwood Lane**
**Kinnelon New Jersey (US)**

(74) Representative: **Wächtershäuser, Günter, Dr.**
**Tal 29**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 046 933 B1

Courier Press, Leamington Spa, England.

**Description**

The present invention relates to hydrometallurgy. More particularly, it relates to the recovery of metals from aqueous solutions by extraction techniques and subsequent scrubbing and stripping of the metal-loaded extractant.

The extraction of cobalt(II) from leach liquors containing nickel(II), by means of water-immiscible organic solutions containing bis(2-ethylhexyl)hydrogen phosphate, is well-known in the art. However, the relatively poor selectivity of this reagent has limited its application by solvent extraction to leach liquors containing nickel(II)/cobalt(II) ratios below 5. Even in these liquors, the process requires expensive, multistage contacting devices to achieve a cobalt(II)/nickel(II) ratio of about 1,000 in the final product.

With leach liquors containing higher nickel(II)/cobalt(II) ratios, for example 50/1, separation of cobalt(II) by solvent extraction can only be achieved using amines and a chloride leach liquor. However, in the chloride systems corrosion is a problem. Alternatively, the Outokumpu Oy hydrometallurgical process may be used, but it is expensive.

The major advantage of the process of Belgian Patent 871,963 over the use of bis(2-ethylhexyl)-hydrogen phosphate lies in the much greater selectivity of cobalt(II) extraction over nickel(II) extraction by the use of phosphonates. The separation factor obtained with the phosphonates is an order of magnitude higher than that obtained with bis(2-ethylhexyl)hydrogen phosphate. There is still a need, however, for other extractants that have high selectivity for the separation of cobalt(II) from nickel(II), and will allow most of the cobalt(II) to be stripped from the extract with a mineral acid.

Summary of the invention

The present invention provides a process for the removal of cobalt(II) from an aqueous cobalt(II)-bearing solution containing nickel(II) as defined in the main claim.

The present invention also provides a process, as described above, with the additional steps of contacting the cobalt(II)-loaded extractant prior to separation with an aqueous solution of a cobalt(II) salt of a mineral acid to remove co-extracted nickel(II) from the loaded extractant to the aqueous phase; separating the aqueous phase from the cobalt(II)-loaded extractant; and thereafter recovering the scrubbed cobalt(II)-loaded extractant.

The present invention also provides processes, as described above, with the additional steps of contacting the residual cobalt(II)-loaded organic solution, or scrubbed cobalt(II)-loaded extractant, with an aqueous solution of a strong mineral acid to strip the cobalt(II) into the aqueous acidic phase; separating the aqueous acidic phase containing water-soluble cobalt(II) salts; and, recovering the stripped organic phase for subsequent reuse in the extraction of another aqueous solution.

Detailed description of the invention

In carrying out the processes of the present invention, extraction techniques believed compatible with an extractant comprising an organophosphinic acid include, but are not limited to, liquid-liquid extraction employing either mixer settlers or columns, such as the reciprocating-plate extraction column, pulse columns or columns employing rotating impellers; packed beds of supported extractants wherein the support can be an inert material, such as diatomaceous earth, or a polymer such as crosslinked polystyrene, the latter approach being more explicitly described in U.S. Patent No. 3,960,762 issued to Kroebel et al. in 1976; liquid membrane extraction as described by Bock, Valint and Hayworth of Exxon Research and Engineering Company; and selective supported membrane extraction as described by Obermayer, Nichols, Allen and Caron of the Moleculon Research Corporation.

The extractant itself is an organic-soluble phosphinic acid or the organic-soluble salt thereof. The free phosphinic acids and their alkali metal or ammonium salts are preferred, but other salts such as nickel or tetrabutylammonium salts may be employed if desired. Although pure extractant can be used, it is generally preferred to employ an extraction solvent comprising from about 2 to 99 parts by volume of extractant with from about 98 to 1 parts by volume of a water-immiscible organic diluent, preferably from about 2 to 70 parts by volume of the extractant with from about 98 to 30 parts by volume of diluent. The extraction solvent may optionally contain from 1 to 15 parts by volume of a phase modifier to promote the separation of the phases and/or increase the solubility of the extracted cobalt(II) salt in the organic phase. If a phase modifier is employed, the amount of organic diluent used should be reduced by a corresponding amount.

Generally, a wide variety of water-immiscible organic liquids may be used as the diluent. Suitable diluents include, but are not limited to, carbon tetrachloride, toluene, xylene, kerosene, naphtha, tridecanol, methylisobutylketone, tributylphosphate, cyclohexane, decane, pyridine, dibromomethane, and the like. Preferably, the diluent is an aliphatic or aromatic petroleum distillate. Suitable phase modifiers, when employed, include: tributylphosphate, trimethylphosphine oxide, tributylphosphine oxide, trihexyl phosphine oxide, trioctylphosphine oxide, isodecanol, and the like. The preferred process employs dicyclohexylphosphinic acid which is more soluble in aromatic (e.g., Exxon Aromatic 100 and 150) than in aliphatic diluents.

Preferably, the organic-soluble phosphinic acid is dicyclohexylphosphinic acid since it demonstrates

significant selectivity and separates cobalt against calcium without leaving behind precipitates of calcium salts at the interface.

Typical organophosphinic acids within the purview of the present invention include, but are not limited to: di - n - propyl; diisopropyl; di - n - butyl; diisobutyl; di - n - pentyl; di - n - hexyl; di - n - heptyl; di - n - octyl; di - n - nonyl; di - n - decyl; di - n - dodecyl; di - n - tetradecyl; di - n - hexadecyl; di - n - eicosyl; bis(2,4,4 - trimethylpentyl)*; (2,4,4 - trimethylpentyl) cyclohexyl*; (2,4,4 - trimethylpentyl) octyl; dicyclopentyl; dicyclohexyl; dicyclooctyl; cyclohexyl, n-butyl; cyclopentyl, n - dodecyl; cyclooctyl ethyl; 2,4,6 - triisopropyl - 1,3,5 - dioxaphosphorinane, 5 - hydroxy, 5 - oxide. Mixtures of one or more of the organophosphinic acids may be employed. The compounds designated * are claimed per se in our copending application 86110998 divided out of this application.

In carrying out the process of the present invention, the cobalt(II)-bearing aqueous solution, is contacted either by batch, continuously co-current or continuously counter-current, with the extraction solvent. The aqueous solution should have an equilibrium pH of at least 3. It is preferred that the aqueous solution have an equilibrium pH of 4.0 to 6.0, more preferably, 4.5±0.5, since very low pH results in poor cobalt recovery, and very high pH is deleterious to phase disengagement. The ratio of aqueous to organic phase should be chosen to most effectively remove the cobalt(II). Aqueous to organic ratios of from 1:20 to 20:1 are believed to be effective, although other ratios may prove to be effective, depending upon the specific separation. The preferred dicyclohexylphosphinic acid solvent has been found to have a stoichiometric loading capacity of 12 gpl cobalt(II) per 100 gpl solvent. Phase contact is commonly achieved in devices called "mixer-settlers", although many other types of devices are available and suitable. In the mixer, one phase is dispersed within the other by stirring or some other appropriate form of agitation. The extraction solvent then forms a complex with the cobalt(II) which reports to the organic phase of the two-phase liquid mixture. The dispersion then flows to the settler where phase disengagement occurs under quiescent conditions. Generally, extraction is carried out between 0—80°C., preferably 20—70°C. Since elevated temperatures are required to obtain good phase disengagement, when dicyclohexylphosphinic acid is employed a minimum temperature of 35 to 40°C. is recommended. The maximum temperature being determined by the diluent's flashpoint.

Depending on the cobalt(II)-nickel(II) ratio in the aqueous feed solution, the cobalt(II)-loaded solvent may or may not have to be scrubbed to remove co-extracted nickel(II) in order to achieve the desired product purity. This is achieved by contacting the loaded solvent with a concentrated aqueous solution of a cobalt salt, approximately 30 g/l of cobalt(II), at aqueous phase/organic phase ratios between 0.05 and 2, preferably 0.1 and 1. Initial studies indicate that any co-extracted nickel can be scrubbed from the loaded solvent with an aqueous solution of a cobalt salt. Generally, scrubbing is carried out at 0—80°C., preferably about 20—60°C.

The cobalt(II)-loaded extraction solvent, one part by volume, is stripped by contacting it with about 0.05—2.0 parts by volume, preferably about 0.1—0.5 part by volume, of a solution of a mineral acid at about 0—80°C., preferably about 20—60°C. at a pH of approximately 1.0. As a result, the cobalt(II) reports to the aqueous phase in the form of a soluble salt of the mineral acid employed. Phase contact may be achieved with mixer-settlers, or other suitable devices.

Suitable mineral acids include sulfuric, hydrochloric, hydrofluoric, nitric, and the like. The preferred mineral acid is sulfuric acid containing about 10—200 grams of sulfuric acid per liter, preferably about 30—100 grams per liter.

The stripped cobalt(II)-free solvent is recycled to the extraction circuit for treatment of incoming cobalt(II)-bearing solutions. The extractant may be recycled to the extraction circuit in the form of the free phosphinic acid. In this case pH control by the addition of a base is required in the extraction circuit. Alternatively, the recycled solvent may be pretreated and converted to the alkali metal or ammonium salt form before reporting to the extraction circuit. In the latter case, pH control in the extraction circuit is not required.

The cobalt(II)-bearing strip liquors may be treated by conventional means to recover cobalt metal, for example, by hydrogen reduction.

It is to be understood that although much of the preceding disclosure relates to liquid-liquid extraction, the principles and properties are believed to extend to those other extraction techniques previously set forth.

Whereas the exact scope of the instant invention is set forth in the appended claims, the following specific examples illustrate certain aspects of the present invention, and, more particularly, point out methods of evaluating the same. However, the examples are set forth for illustration only and are not to be construed as limitations on the present invention except as set forth in the appended claims. All parts and percentages are by weight unless otherwise specified.

Example 1

The following example illustrates the ability of dioctylphosphinic acid to separate cobalt(II) and nickel(II) under different pH conditions.

The dioctylphosphinic acid is dissolved in an aliphatic petroleum diluent to obtain a concentration of 15% by volume, then a predetermined amount of 28% ammonium hydroxide is added to adjust the pH. An aliquot (50 mls) is shaken at 50°C. for 10 minutes with an equal volume of an aqueous solution containing

10.24 g/l of cobalt(II) and 10.12 g/l of nickel(II), respectively, as sulfate salts, to extract the cobalt(II) into the organic phase. The aqueous phase is then separated from the organic phase and analyzed for cobalt(II) content. Based on the results obtained, the percent cobalt(II) extracted is calculated by mass balance. The percent nickel(II) extracted is determined by analyzing the organic phase. The results obtained are shown in Table I.

TABLE I

| | Percent extraction | |
|---|---|---|
| Equilibrium pH | Co(II) | Ni(II) |
| 2.54 | 6.25 | 0 |
| 2.90 | 8.59 | 0.33 |
| 3.25 | 24.8 | 0.61 |
| 3.55 | 43.5 | 0.78 |
| 4.12 | 75.8 | 0.91 |
| 5.01 | 89.6 | 2.42 |
| 5.73 | 98.5 | 9.15 |

Example 2

The procedure of Example 1 is followed except that dihexylphosphinic acid is used as the extractant, and the initial aqueous solution contains 10.38 g/l of cobalt(III), and 10.42 g/l of nickel(II), as sulfate salts. The results obtained are shown in Table II.

TABLE II

| | Percent extraction | |
|---|---|---|
| Equilibrium pH | Co(II) | Ni(II) |
| 3.10 | 10.2 | 0.55 |
| 3.46 | 36.2 | 1.14 |
| 3.78 | 63.0 | 1.17 |
| 4.23 | 81.5 | 2.22 |
| 5.00 | 97.8 | 7.89 |
| 5.22 | 98.0 | 13.7 |

Comparative Example A

The procedure of Example 1 is followed except that bis(2-ethylhexyl)hydrogen phosphate is used as the extractant, and the initial aqueous solution contains 10.38 g/l of cobalt(II), and 10.42 g/l of nickel(II), as sulfate salts. The results obtained are shown in Table III.

TABLE III

| | Percent extraction | |
|---|---|---|
| Equilibrium pH | Co(II) | Ni(II) |
| 2.90 | 2.90 | 4.41 |
| 3.33 | 36.10 | 7.29 |
| 4.00 | 58.1 | 13.6 |
| 4.68 | 70.3 | 21.3 |
| 5.61 | 85.3 | 31.9 |

A comparison of the results obtained in Examples 1, 2, and Comparative Example A when the pH is calculated at pH 5.0, shows that the separation is of an order of magnitude higher than that of bis(2-ethylhexyl)hydrogen phosphate.

| Extractant | Separation factor[1] |
|---|---|
| dihexylphosphinic acid | 520 |
| dioctylphosphinic acid | 348 |
| bis(2-ethylhexyl)hydrogen phosphate | 11 |

[1] Separation Factor$=\dfrac{E°_A\ Co(II)}{E°_A\ Ni(II)}$,

where

$$E°_A=\frac{\text{equilibrium concentration of the metal in the organic phase}}{\text{equilibrium concentration of the metal in the aqueous phase}}$$

Example 3

The procedure of Example 1 is followed except that 15% by volume of dihexylphosphinic acid is used in an aromatic petroleum solvent, together with 5% by volume of isodecanol, as a phase modifier, and the initial aqueous solution contains 2.06 g/l of cobalt(II), and 101.4 g/l of nickel(II), as sulfate salts. The results obtained are shown in Table IV.

TABLE IV

| | Percent extraction | |
|---|---|---|
| Equilibrium pH | Co(II) | Ni(II) |
| 2.51 | 2.00 | 0.04 |
| 3.41 | 28.5 | 0.70 |
| 4.00 | 59.5 | 1.76 |
| 4.69 | 84.3 | 4.22 |
| 5.02 | 89.9 | 6.54 |
| 5.10 | 90.2 | 6.76 |

Based on the above data, the separation factor at pH 5.0 is 127.

Comparative Example B

The procedure of Example 3 is followed in every detail except that bis(2-ethylhexyl)hydrogen phosphate is used instead of dihexylphosphinic acid. The results obtained are shown in Table V.

TABLE V

| | Percent extraction | |
|---|---|---|
| Equilibrium pH | Co(II) | Ni(II) |
| 3.02 | 10.4 | 3.16 |
| 3.50 | 18.0 | 3.35 |
| 3.59 | 22.6 | 4.54 |
| 4.65 | 22.6 | 9.07 |
| 5.21 | 22.6 | 13.6 |

Based on the above data, the separation factor at pH 5 is 2.3. Comparison with the separation factor at pH 5 in Example 3 shows that dihexylphosphinic acid is an order of magnitude more selective than bis(2-ethylhexyl)hydrogen phosphate.

Example 4

The procedure of Example 1 is followed except that 15% by volume of diisobutylphosphinic acid is used in an aromatic petroleum solvent, together with 5% by volume of isodecanol, and the initial aqueous solution contains 10.20 g/l of cobalt(II), and 10.12 g/l of nickel(II), as sulfate salts. The results obtained are shown in Table VI.

TABLE VI

| | Percent extraction | |
|---|---|---|
| Equilibrium pH | Co(II) | Ni(II) |
| 2.90 | 10.6 | 0.05 |
| 3.24 | 23.1 | 0.07 |
| 3.55 | 44.9 | 0.11 |
| 3.77 | 63.9 | 0.12 |
| 3.96 | 80.4 | 0.15 |

Example 5

The following example illustrates treatment of the cobalt(II)-loaded solvent for the removal of co-extracted nickel(II) to achieve a final product wherein the weight ratio of cobalt(II) to nickel(II) is greater than 500.

The procedure of Example 3 is followed at an equilibrium pH of the aqueous phase of 4.54 to obtain a loaded solvent containing 1.56 g/l of cobalt(II), and 4.92 g/l of nickel(II). The loaded solvent is then shaken for 5 minutes at 50°C. with an equal volume (50 mls) of an aqueous solution of cobalt sulfate [30 g/l of cobalt(II)]. The equilibrium pH of the aqueous phase is adjusted to 5 with ammonium hydroxide and the two phases are shaken again for 5 minutes at 50°C. This is repeated for a total of four contacts. At this point, analysis shows that the organic phase contains 5.88 g/l of cobalt(II), and 0.01 g/l of nickel(II).

Example 6

The loaded solvent of Example 5 (100 mls), containing 1.56 g/l of cobalt(II), and 4.92 g/l of nickel(II), is shaken with 3% by weight $H_2SO_4$ in water (25 mls) at 50°C. for 5 minutes. Analysis shows that 92.7% of nickel(II), and 25.6% of cobalt(II), has been stripped from the organic phase. This result shows that the nickel(II) in the loaded solvent is more easily stripped therefrom than cobalt(II).

Example 7

The procedure of Example 3 is followed except that the initial aqueous solution contains 13.2 g/l of cobalt(II), as cobalt sulfate. A 50-ml aliquot of the extraction solvent is contacted for 10 minutes at 50°C. with a 50-ml aliquot of the aqueous solution, the aqueous phase is separated, and the cobalt(II)-loaded solvent is contacted again with a fresh 50-ml aliquot of aqueous feed solution. This is repeated for a total of 4 contacts with fresh aqueous feed solution. The cobalt(II)-loaded solvent is then contacted for 5 minutes at 50°C. with 5% sulfuric acid at aqueous phase/organic phase (A/O) volume ratios of 1/3, and 1/2, respectively. The results obtained are shown below.

| A/O | Percent cobalt(II) stripped |
|---|---|
| 1/3 | 80.8 |
| 1/2 | 100 |

The above results show that when A/O is 1/2 a quantitative recovery of cobalt(II) from the organic phase is obtained.

Example 8

The procedure of Example 1 is followed except that a solution of 5.5% v/v of the 1,3,5 - dioxaphosphorine - 2,4,6 - triisopropyl - 5 - hydroxy - 5 - oxide extractant plus 5% v/v isodecanol in Solvesso® 100 (Exxon Corp.) is used. The initial sulfate solution contained 1.74 g/l Co and 104.8 g/l Ni. The results obtained are shown in Table VII. A separation factor of 5740 is calculated from the data at pH 4.64.

TABLE VII

| | % Metal extraction | |
|---|---|---|
| Equilibrium pH | Co | Ni |
| 2.50 | 0 | 0 |
| 3.50 | 25.3 | 0.16 |
| 4.28 | 75.4 | 0.33 |
| 4.64 | 97.0 | 0.56 |

Example 9

The procedure of Example 1 is followed except that a solution of 15% v/v of the dicyclohexylphosphinic acid extractant plus 5% v/v isodecanol in Solvesso® 100 is used. The initial sulfate solution contained 2.16 g/l Co and 110.4 g/l Ni. From the data shown in Table VIII a separation factor of 4836 is calculated at pH 4.65.

TABLE VIII

| | % Metal extraction | |
|---|---|---|
| Equilibrium pH | Co | Ni |
| 2.58 | 0.74 | 0.03 |
| 3.78 | 69.1 | 0.10 |
| 4.05 | 73.1 | 0.10 |
| 4.65 | 95.0 | 0.39 |

Example 10

The procedure of Example 1 is followed except that a solution of 180 grams per liter of the bis(2,4,4 - trimethylpentyl)phosphinic acid extractant plus 5% v/v isodecanol in Varsol® DX-3641 is used. The initial

sulfate solution contained 1.90 g/l Co and 103.6 g/l Ni. A separation factor of 407 at pH 5.12 is calculated from the data shown in Table IX.

TABLE IX

| | % Metal extraction | |
|---|---|---|
| Equilibrium pH | Co | Ni |
| 2.63 | 3.1 | 0 |
| 3.62 | 29.5 | 0.89 |
| 4.30 | 57.6 | 0.99 |
| 4.89 | 83.5 | 1.63 |
| 5.00 | 88.5 | 1.93 |
| 5.12 | 91.2 | 2.48 |

Example 11

The procedure of Example 1 is followed except that a solution of 135 grams per liter of the bis(3,3-dimethylbutyl)phosphinic acid extractant in Solvesso® 100 is used, in combination with 5% v/v isodecanol. The initial aqueous sulfate solution contained 2.07 g/l Co and 95.5 g/l Ni. From the data in Table X separation factor of 219 is calculated at pH 4.68.

TABLE X

| | % Metal extraction | |
|---|---|---|
| Equilibrium pH | Co | Ni |
| 2.57 | 3.4 | 0.02 |
| 3.46 | 28.8 | 0.35 |
| 3.70 | 44.0 | 0.55 |
| 4.68 | 86.2 | 2.76 |

Example 12

The procedure of Example 1 is followed except that a solution of 15% v/v of the di-n-octylphosphinic acid extractant in Kermac® 470B is used. The initial sulfate solution contained 2.12 g/l Co and 104.2 g/l Ni. A separation factor of 86 at pH 5 is calculated from the data shown in Table XI.

TABLE XI

| | % Metal extraction | |
|---|---|---|
| Equilibrium pH | Co | Ni |
| 3.40 | 41.6 | 1.45 |
| 4.23 | 70.9 | 2.46 |
| 4.81 | 84.4 | 4.93 |
| 5.05 | 85.0 | 6.96 |
| 5.38 | 84.4 | 9.31 |

Comparative Example C

The procedure of Example 1 is followed except that a solution of 15% v/v of the octylphosphonic acid, decyl ester extractant acid plus 5% v/v isodecanol in Solvesso® 100 is used. The initial aqueous sulfate solution contained 2.06 g/l Co and 101.4 g/l Ni. From the data shown in Table XII, a separation factor of 21 is calculated at a pH 4.89.

TABLE XII

| | % Metal extraction | |
|---|---|---|
| Equilibrium pH | Co | Ni |
| 2.72 | 4.76 | 1.73 |
| 3.13 | 17.4 | 2.41 |
| 3.85 | 35.6 | 5.13 |
| 4.35 | 47.0 | 7.32 |
| 4.63 | 64.0 | 8.95 |
| 4.89 | 69.2 | 9.71 |

Example 13

The procedure of Example 1 is followed except that a solution of 180 gpl of the di-2,2,4-trimethylpentylphosphinic acid in Solvesso® 100 modified with 5% v/v isodecanol is used. The initial sulfate solution contained 1.97 gpl Co and 93.6 gpl Ni. The A/O ratio is 1.0 and the temperature is maintained at 50°C. for a ten (10) minute contact. Test results are given in Table XIII.

TABLE XIII

| % Metal extraction | | Co/Ni separation factor | Equilibrium pH |
|---|---|---|---|
| Co | Ni | | |
| 3.09 | 0 | — | 2.81 |
| 38.2 | 0.28 | 217 | 3.99 |
| 85.1 | 1.10 | 516 | 4.94 |
| 97.8 | 2.22 | 1975 | 5.33 |
| 100 | 3.10 | ∞ | 5.52 |

Example 14

The procedure of Example 1 is followed except that a solution of 180 gpl of the di-2,4,4-trimethylpentylphosphinic acid in Varsol® DX-3641 modified with 5% v/v isodecanol is used. The initial sulphate solution contained 1.90 gpl Co and 103.6 gpl Ni. The A/O ratio is 1.0 and the temperature is maintained at 50°C. for a 10-minute contact. Test results are set forth in Table XIV.

TABLE XIV

| % Metal extraction Co | Ni | Co/Ni separation factor | Equilibrium pH |
|---|---|---|---|
| 3.1 | 0 | — | 2.63 |
| 29.5 | 0.89 | — | 3.62 |
| 57.6 | 0.99 | 135 | 4.30 |
| 83.5 | 1.63 | 305 | 4.89 |
| 88.5 | 1.93 | 391 | 5.00 |
| 91.2 | 2.48 | 407 | 5.12 |

Example 15

The procedure of Example 1 is followed except that a solution of 169 gpl 2,4,4-trimethylpentyl, cyclohexyl phosphinic acid in Solvesso® 100 modified with 5% v/v isodecanol is used. The initial sulphate solution contains 2.05 gpl cobalt and 102.4 gpl nickel. The A/O ratio is 1.0, the temperature is maintained at 50°C for a five (5) minute contact. Test results are given in Table XV.

TABLE XV

| % Metal extraction Co | Ni | Co/Ni separation factor | Equilibrium pH |
|---|---|---|---|
| 85.1 | 0.78 | 726 | 4.70 |
| 95.6 | 1.66 | 1274 | 5.18 |
| 98.4 | 3.19 | 1910 | 5.53 |
| 99.9 | 4.64 | 21030 | 5.80 |

Example 16

26 g. of polystyrene beads are placed in a rotary evaporator with 5.4 g. of dihexylphosphinic acid dissolved in toluene. The toluene is stripped and the polystyrene beads are transferred to a Jones reductor in the form of an aqueous slurry. 100 mls. of a cobalt-nickel sulphate leach liquor (approximately 2.2 gpl Co, 100 gpl Ni, initial pH=6.2) are passed through the column at a rate of approximately 10 mls/min.

The beads developed a distinct blue color, indicating formation of the tetrahedrally co-ordinated Co-phosphinic acid complex. The column is then washed with distilled water (pH=5.6) until low nickel assays (10 ug/ml) are observed in the wash water. Analysis indicated that a cobalt recovery of 15% is achieved.

The column is then eluted with 10% $H_2SO_4$. The eluate is found to contain 604 ug Co/ml and 97 ug Ni/ml. These experiments demonstrate the use of supported phosphines in this application.

Examples 17—19

Following the procedure of Example 7 in every material detail except that in place of the sulfuric acid solution there is now employed a solution of hydrochloric, hydrofluoric, or nitric acid, substantially similar results are obtained.

Example 20

The procedure of Example 1 is followed except that a solution of 100 gpl of dicyclohexylphosphinic acid in Solvesso® 150 modified with 10% v/v tridecanol is used. This solvent is loaded with 1 gpl $Fe^{+3}$. The A/O ratio is 3.0, the temperature is maintained at 50°C for a 5-minute contact with 300 gpl $H_2SO_4$ for stripping. Test results are as follows:

| A/O | % $Fe^{+3}$ Stripped |
|---|---|
| 0.5 | 100 |
| 1 | 93 |
| 2 | 96 |

The data indicate the ability of $H_2SO_4$ to strip co-extracted impurity metals from the organophosphinic acid. Analogous results are obtained with Cu and Zn.

Example 21

Following the procedure of Example 1 in every material detail except that in place of the cobalt(II) and nickel(II) being sulfate salts they are as nitric salts, chloride salts or fluoride salts, substantially similar results are obtained.

Example 22

When a solution of 30 parts of styrene, 20 parts of 55% divinyl benzene, 0.5 parts of azobis(isobutyronitrile) and 25 parts of bis(2,4,4-trimethylpentyl) phosphinic acid is introduced into a starting mixture of 400 parts of 0.2% methyl cellulose solution and the mixture is heated under nitrogen atmosphere with rapid stirring at 80°C for 10 hours; and further heated for 1 hour at 90°C then, after cooling, if the resulting polymer beads are filtered, washed with water, and then dried in a vacuum oven, the resultant polymer beads will extract cobalt(II) from a cobalt(II)-bearing solution.

The method for producing di-2,4,4-trimethylpentylphosphine acid, i.e.

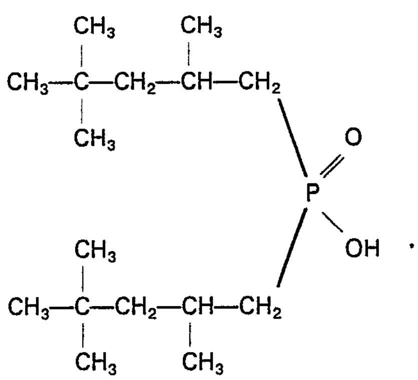

comprises free radical addition of two moles of 2,4,4-trimethylpentene-1 to 2,4,4-trimethylpentylphosphine followed by its oxidation with two moles of hydrogen peroxide.

In the preparation of this compound free radical initiators of the azobis type are preferred although others, such as the peroxides, may be used. Azobisobutrylnitrile is the most preferred. Pure 2,4,4-trimethylpentene-1 is commercially available or may be prepared with diisobutylene. The temperature range of the reaction is directly related to the half life of the initiator employed. For azobisobutrylnitrile the temperature range should be from about 40—110°C., preferably 60° to 90°C. The phosphine addition will take place at any temperature, however to reduce unwanted tri-2,4,4-trimethylpentylphosphine, high phosphine pressures, i.e., high phosphine to olefin mole ratios, are required. The preferred range is 300—700 psig although pressure ranging from 0 to 1000 psig can be employed. Under high phosphine conditions the mono 2,4,4-trimethylpentylphosphine formed can be recycled and converted into the di- form. Tri-2,4,4-trimethylpentylphosphine formed under low phosphinic pressures is a yield loss.

In the oxidation stage, the oxidation of the dialkylphosphine to the dialkylphosphine oxide is exothermic and takes place readily at 30°C.—100°C., preferably for this first oxidation step at 50°C.—70°C. To convert the dialkylphosphine oxide to the dialkylphosphinic acid, the temperature should be increased to within 50°C. to 120°C., preferably 80°C. to 100°C. Higher temperatures tend to remove one alkyl group forming some monoalkylphosphonic acid. At lower temperatures the oxidation is rather slow and excessive reaction times may be required.

Example 23

1500 parts of diisobutylene (a commercial source of 2,4,4-trimethylpentene-1 consisting of 70% 2,4,4-trimethylpentene-1 and 30% 2,4,4-trimethylpentene-2) is charged to the autoclave along with 25 parts azobis isobuturylnitrile (Vazo 64®).

The autoclave is pressurized to 550 psig with phosphine and is quickly heated to 60°C. At this point the pressure begins to drop as the phosphine addition to 2,4,4-trimethylpentene-1 begins. The pressure is

maintained at 550 psig by the addition of more phosphine. The temperature is slowly raised from 60°C. to 90°C. over a 4 1/2 hour period. A further 1/2 hour at 90—100°C. destroys any remaining initiator and the reaction stops. The excess phosphine is vented off and the reaction product is cooled and discharged. A total of 546 parts of phosphine are used in the reaction. 1593 parts of product containing 15.62% 2,4,4-trimethylpentene-1, 19.34% 2,4,4-trimethylpentene-2, 34.63% mono 2,4,4-trimethylpentylphosphine, 22.39% di-2,4,4-trimethylpentylphosphine and 2.0% tri-2,4,4-trimethylpentylphosphine are recovered.

The product mixture is distilled to recover the di-2,4,4-trimethylpentylphosphine. The vapor temperature of the various components are as follows:

| | |
|---|---|
| olefin mixture | 90°C. (510 mm Hg) |
| mono 2,4,4'-trimethylpentylphosphine | 110°C. (124 mm Hg) |
| di-2,4,4-trimethylpentylphosphine | 140°C. (64.5 mm Hg) |

477.1 parts of di-2,2,4-trimethylpentylphosphine containing 0.27 mono and 2.44% tri-2,4,4-trimethylpentylphosphine are charged to a heated stirred resin flask under an inert atmosphere. The dialkylphosphine is heated to 60°C. 290 parts of 22.49% $H_2O_2$ is added with stirring over a 3/4 hour period at 60—70°C. The remaining 290 parts are added over 1 hour period at 95—98°C. The product separated as a clear oily layer on top of the aqueous phase.

The product is decanted from the aqueous phase and is vacuumed dried overnight at 60°C. A total of 520 parts are recovered. It assayed 88% di-2,4,4-trimethylpentyl- phosphinic acid and had a pKa of 6.03±0.05 in 75% isopropanol.

The $^{31}P$ NMR chemical shift of the 2,4,4-trimethylpentylphosphinic acid in isopropanol is −53.68 ppm with respect to 85% $H_3PO_4$. The $^{31}P$ NMR spectrum also indicated the presence of 2.0% di-2,4,4-trimethylpentylphosphine oxide, 4.0% tri- 2,4,4-trimethylpentylphosphine oxide and 7—8% total of 4 different phosphonic acids or phosphonate esters.

Example 24

The following example illustrates the ability of di-2,4,4-trimethylpentylphosphinic acid to separate cobalt(II) from nickel(II).

The di-2,4,4-trimethylpentylphosphinic acid is dissolved in an aliphatic petroleum diluent (Solvesso® 100) modified with 5% v/v isodecanol to obtain a concentration of 15% by volume, then a predetermined amount of 28% ammonium hydroxide is added to adjust the pH. An aliquot (50 mls.) is shaken at 50°C. for 10 minutes at 50°C. with an equal volume of an aqueous solution containing 1.97 gpl of cobalt(II) and 93.6 gpl of nickel(II), respectively, as sulfate salts, to extract the cobalt(II) into the organic phase. The aqueous phase is then separated from the organic phase and analyzed for cobalt(II) content. Based on the results obtained, the percent cobalt(II) extracted is calculated by mass balance. The percent nickel(II) extracted is determined by analyzing the organic phase. The results obtained are shown in Table XVI.

TABLE XVI

| % Metal extraction | | Co/Ni separation factor[1] | Equilibrium pH |
|---|---|---|---|
| Co | Ni | | |
| 3.09 | 0 | — | 2.81 |
| 38.2 | 0.28 | 217 | 3.99 |
| 85.1 | 1.10 | 516 | 4.94 |
| 97.8 | 2.22 | 1975 | 5.33 |
| 100 | 3.10 | | 5.52 |

[1]Separation Factor $= \dfrac{E°_A\ Co(II)}{E°_A\ Ni(II)}$,

where

$$E°_A = \frac{\text{equilibrium concentration of the metal in the organic phase}}{\text{equilibrium concentration of the metal in the aqueous phase}}$$

Example 25

The procedure of Example 1 is followed except that a solution of 180 gpl of the di-2,4,4-trimethylpentylphosphinic acid in Varsol DX-3641 modified with 5% v/v isodecanol is used. The initial sulphate solution contained 1.90 gpl Co and 103.6 gpl Ni. The A/O ratio is 1.0 and the temperature is maintained at 50°C. for a 10-minute contact. Test results are set forth in Table XVII.

TABLE XVII

| % Metal extraction | | Co/Ni separation factor | Equilibrium pH |
|---|---|---|---|
| Co | Ni | | |
| 3.1 | 0 | — | 2.63 |
| 29.5 | 0.89 | — | 3.62 |
| 57.6 | 0.99 | 135 | 4.30 |
| 83.5 | 1.63 | 305 | 4.89 |
| 88.5 | 1.93 | 391 | 5.00 |
| 91.2 | 2.48 | 407 | 5.12 |

The method for preparing 2,4,4-trimethylpentyl, cyclohexylphosphinic acid, i.e.,

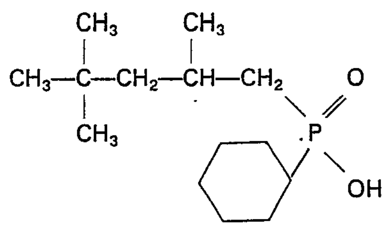

comprises free radical addition of mono 2,4,4-trimethylpentylphosphine to cyclohexene followed by the oxidation of the 2,4,4-trimethylpentyl, cyclohexylphosphine with two moles of hydrogen peroxide.

In the preparation of this compound free radical initiators of the azobis type are preferred although others, such as the peroxides, may be used. Azobisobutrylnitrile is the most preferred. The temperature range of the reaction is directly related to the half life of the initiator employed. For azobisbutrylnitrile the temperature range should be about 40°—110°C, preferably 60° to 90°C. The mole ratio of olefin to mono alkylphosphine can vary from 0.1 to 10 depending on the relative rates of formation of the di- and tri-alkylphosphines. Preferably the range is between 0.5 to 3.

In the oxidation stage, the oxidation of the dialkylphosphine to the dialkylphosphine oxide is exothermic and takes place readily at 30°—100°, preferably for this first oxidation step at 50°—70°C. To convert the dialkylphosphine oxide to the dialkylphosphine acid, the temperature should be increased to within 50° to 120°C, preferably 80° to 100°C. Higher temperatures tend to remove one alkyl group forming some monoalkylphosphonic acid. At lower temperatures the oxidation is rather slow and excessive reaction times may be required.

Example 26

500 parts of 90.5% mono 2,4,4-trimethylpentylphosphine is charged along with 482 parts of cyclohexene to a 1 gallon autoclave. 15 parts of azobisobutrylnitrile (VAZO 64®) is added and the mixture quickly heated to 60°C. The temperature is then slowly raised from 60°C to 87°C over a 5 1/2 hour period.

The product contained 39.36% cyclohexene, 22.70% mono 2,4,4 trimethylpentylphosphine, 35.26% 2,4,4 trimethylpentyl, cyclohexylphosphine, and 0.35% 2,4,4 trimethylpentyl, dicyclohexylphosphine.

A further 20 parts of azobisobutrylnitrile is added to the mixture. It is heated quickly to 60°C and then slowly from 60°C to 89° over a 6 1/2 hour period.

The product contained 34.39% cyclohexene 11.14% mono 2,4,4 trimethylpentylphosphine, 48.3% 2,4,4 trimethylpentyl, cyclohexylphosphine, and 2.18% 2,4,4 trimethylpentyl dicyclohexylphosphine.

The product mixture is then distilled to remove the cyclohexene and mono 2,4,4 trimethylpentylphosphine. 516.9 parts of the residue containing 0.45% mono 2,4,4 trimethylpentylphosphine, 90.0% 2,4,4 trimethylpentyl cyclohexylphosphine and 3.48% 2,4,4 trimethylpentyl, dicyclohexylphosphine is placed in

a stirred, heated resin flask under an inert atmosphere. The mixture is heated to 50°C and 575 mL of 24% $H_2O_2$ is added slowly with stirring over 1 1/2 hours. During that time the temperature rose from 50°C to 98°C. To completely oxidize all the dialkylphosphine to the phosphinic acid, an additional 500 g of 24% $H_2O_2$ is added and the mixture heated for a further 5 hours at 100°C.

The product is then decanted as a viscous oil. It assayed 85.97% phosphinic acid but also contained 9.58% mono 2,4,4 trimethylpentylphosphonic acid. During the severe oxidation conditions, a portion of the cyclohexyl groups were removed and the resulting 2,4,4 trimethylpentylphosphine is oxidized to 2,4,4 trimethylpentylphosphonic acid.

Most of the phosphonic acid is removed by scrubbing with 0.1N NaOH and water. The final product assayed 85.37% 2,4,4 trimethylpentyl, cyclohexylphosphinic acid and 4.86% 2,4,4 trimethylpentylphosphonic acid.

The product is a viscous oil and had a pKa of 6.04 in 75% isopropanol. The $^{31}P$ NMR chemical shift in toluene is −53.13 ppm with respect to 85% $H_3PO_4$.

Example 27

The following example illustrates the ability of 2,4,4-trimethylpentyl, cyclohexyl phosphinic acid to separate cobalt(II) from nickel(II).

The 2,4,4'-trimethylpentyl, cyclohexylphosphinic acid is dissolved in an aliphatic petroleum diluent (Solvesso® 100) modified with 5% v/v isoderanol to obtain a concentration of 15% by volume, then a predetermined amount of 28% ammonium hydroxide is added to adjust the pH. An aliquot (50 mls) is shaken at 50°C. for 5 minutes at 50°C with an equal volume of an aqueous solution containing 2.05 gpl of cobalt(II) and 102.4 gpl of nickel(II), respectively, as sulfate salts, to extract the cobalt(II) into the organic phase. The aqueous phase is then separated from the organic phase and analyzed for cobalt(II) content. Based on the results obtained, the percent cobalt(II) extracted is calculated by mass balance. The percent nickel(II) extracted is determined by analyzing the organic phase. The results obtained are shown in Table XVIII.

TABLE XVIII

| % Metal extraction | | Co/Ni separation factor[1] | Equilibrium pH |
|---|---|---|---|
| Co | Ni | | |
| 85.1 | 0.78 | 726 | 4.70 |
| 95.6 | 1.66 | 1274 | 5.18 |
| 98.4 | 3.19 | 1910 | 5.53 |
| 99.9 | 4.64 | 21030 | 5.80 |

$$^{(1)}\text{Separation Factor} = \frac{E^{\circ}_{A}\ Co(II)}{E^{\circ}_{A}\ Ni(II)},$$

where

$$E^{\circ}_{A} = \frac{\text{equilibrium concentration of the metal in the organic phase}}{\text{equilibrium concentration of the metal in the aqueous phase}}$$

**Claims**

1. A process for the extraction of cobalt(II) from an aqueous cobalt(II)-bearing solution containing nickel(II) by contacting said solution having an equilibrium pH of at least 3, with an extractant comprising 1,3,5 - dioxaphosphorine - 2,4,6 - triisopropyl - 5 - hydroxy - 5 - oxide or an organic-soluble phosphinic acid having at least six carbon atoms and having the general formula

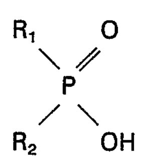

wherein $R_1$ and $R_2$ are individually alkyl, alkoxyalkyl, cycloalkyl or alkylcycloalkyl or an organic-soluble salt thereof.

2. The process of Claim 1 wherein the aqueous cobalt(II)-bearing solution has an equilibrium pH of about 4 to 6 and extraction occurs at a temperature in the range of 0° to 80°C.

3. The process of Claim 2 wherein the pH is 4.5±0.5 and the temperature is 20° to 70°C.

4. The process of Claim 2 wherein the organic-soluble phosphinic acid is dicyclohexylphosphinic acid.

5. The process of Claim 2 wherein the organic-soluble phosphinic acid is 2,4,4-trimethylpentyl, cyclohexylphosphinic acid.

6. The process of Claim 2 wherein the organic-soluble phosphinic acid is di-2,4,4-trimethylpentyl-phosphinic acid.

7. A process according to claim 1, characterized in that the extractant comprises from about 2 to 99 parts by volume of the organic-soluble phosphinic acid or salt thereof and from about 98 to 1 parts by volume of a water-immiscible organic diluent and from 0 to about 15 parts by volume of a phase modifier.

8. The process of Claim 7 wherein from about 0.05 to 20 parts by volume of the aqueous solution are employed per part by volume of the extraction solvent.

9. The process of Claim 7 wherein from about 1.0 to 10 parts by volume of the aqueous solution are employed per part by volume of the extraction solvent.

10. A process according to Claim 7 with the additional steps of contacting the cobalt(II)-loaded extraction solvent with an aqueous solution of a mineral acid at about 0—80°C. to strip the cobalt(II) into the aqueous phase; separate the cobalt(II)-containing aqueous phase; and, recovering the stripped extraction solvent for subsequent reuse.

11. The process according to Claim 7 wherein the mineral acid is an aqueous solution of sulfuric acid containing about 10—200 grams of sulfuric acid per liter of solution.

12. A process according to Claim 7 with the additional steps of contacting the cobalt(II)-loaded extraction solvent with an aqueous solution of a cobalt(II) salt of a mineral acid at about 0—80°C. to remove co-extracted nickel(II) from the loaded solvent to the aqueous phase; separating the aqueous phase from the cobalt(II)-loaded extraction solvent; and recovering the scrubbed cobalt(II)-loaded extraction solvent.

13. The process according to Claim 12 wherein said aqueous solution of a cobalt(II) salt of a mineral acid contains either cobalt sulfate, cobalt nitrate or cobalt chloride.

14. A process acording to Claim 12 with the additional steps of contacting the cobalt(II)-loaded extraction solvent with an aqueous solution of a mineral acid at about 0—80°C. to strip the cobalt(II) into the aqueous phase; separate the cobalt(II)-containing aqueous phase; and, recovering the stripped extraction solvent for subsequent reuse.

15. The process of Claims 1 or 7 wherein the organic soluble phosphinic acid salt is selected from alkali metal salts, ammonium salts, nickel salts and tetrabutylammonium salts.

16. The process of Claims 1 or 7 wherein the extraction technique employed is selected from liquid-liquid extraction, extraction through packed beds of supported reagents, liquid membrane extraction and selective supported membrane extraction.

**Patentansprüche**

1. Verfahren zur Extraktion von Kobalt(II) aus einer wässrigen Kobalt(II)-haltigen Lösung mit einem Gehalt an Nickel(II) durch Kontaktierung der Lösung, welche einen Gleichgewichts-pH von mindestens 3 aufweist, mit einem Extraktionsmittel umfassend 1,3,5 - Dioxaphosphorin - 2,4,6 - triisopropyl - 5 - hydroxy - 5 - oxyd oder eine in organischem Medium lösliche Phosphinsäure mit mindestens 6 Kohlenstoffatomen und mit der allgemeinen Formel

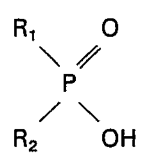

wobei $R_1$ und $R_2$ unabhängig Alkyl, Alkoxyalkyl, Cycloalkyl oder Alkylcycloalkyl bedeuten oder ein in organischem Medium lösliches Salz derselben.

2. Verfahren gemäß Anspruch 1, wobei die wässrige Kobalt(II)-haltige Lösung einen Gleichgewichts-pH von etwa 4 bis 6 aufweist und die Extraktion bei einer Temperatur im Bereich von 0 bis 80°C abläuft.

3. Verfahren gemäß Anspruch 2, wobei der pH 4,5±0,5 beträgt und die Temperatur 20 bis 70°C.

4. Verfahren gemäß Anspruch 2, wobei die in organischem Medium lösliche Phosphinsäure Dicyclohexylphosphinsäure ist.

5. Verfahren gemäß Anspruch 2, wobei die in organischem Medium lösliche Phosphinsäure 2,4,4-Trimethylpentylcyclohexylphosphinsäure ist.

6. Verfahren gemäß Anspruch 2, wobei die in organischem Medium lösliche Phosphinsäure Di-2,4,4-trimethylpentylphosphinsäure ist.

7. Verfahren gemäß Anspruch 1, dadurch gekennzeichnet, daß das Extraktionsmittel von etwa 2 bis 99 Volumenteile der in organischem Medium löslichen Phosphinsäure oder deren Salz und von etwa 98 bis 1

Volumenteile eines wasserunmischbaren organischen Verdünnungsmittels umfaßt sowie von 0 bis etwa 15 Volumenteile eines Phasenmodifiziermittels.

8. Verfahren gemäß Anspruch 7, wobei von etwa 0,05 bis 20 Volumenteile der wässrigen Lösung eingesetzt werden pro Volumenteil des Extraktionslösungsmittels.

9. Verfahren gemäß Anspruch 7, wobei von etwa 1,0 bis 10 Volumenteile der wässrigen Lösung eingesetzt werden pro Volumenteil des Extraktionslösungsmittels.

10. Verfahren gemäß Anspruch 7 mit den zusätzlichen Verfahrensstufen der Kontaktierung des Kobalt(II)-beladenen Extraktionslösungsmittels mit einer wässrigen Lösung einer Mineralsäure bei etwa 0 bis 80°C, um das Kobalt(II) in die wässrige Phase zu streifen; Abtrennung der Kobalt(II)-haltigen wässrigen Phase; und Rückgewinnung des abgestreiften Extraktionslösungsmittels für die anschliessende Wiederverwendung.

11. Verfahren gemäß Anspruch 7, wobei die Mineralsäure eine wässrige Lösung von Schwefelsäure mit einem Gehalt von etwa 10 bis 200 g Schwefelsäure pro Liter Lösung ist.

12. Verfahren gemäß Anspruch 7 mit den zusätzlichen Verfahrensstufen der Kontaktierung des Kobalt(II)-beladenen Extraktionslösungsmittels mit einer wässrigen Lösung eines Kobalt(II)-Salzes von einer Mineralsäure bei etwa 0 bis 80°C zur Entfernung von co-extrahiertem Nickel(II) aus dem beladenen Lösungsmittel in die wässrige Phase; Abtrennung der wässrigen Phase von dem Kobalt(II)-beladenen Extraktionslösungsmittel; und Rückgewinnung des geschrubbten Kobalt(II)-beladenen Extraktionslösungsmittels.

13. Verfahren gemäß Anspruch 12, wobei die wässrige Lösung eines Kobalt(II)-Salzes einer Mineralsäure entweder Kobaltsulfat, Kobaltnitrat oder Kobaltchlorid enthält.

14. Verfahren gemäß Anspruch 12 mit den zusätzlichen Verfahrensstufen der Kontaktierung des Kobalt(II)-beladenen Extraktionslösungsmittels mit einer wässrigen Lösung einer Mineralsäure bei etwa 0 bis 80°C, um das Kobalt(II) in die wässrige Phase zu streifen; Abtrennung der Kobalt(II)-haltigen wässrigen Phase; und Rückgewinnung des abgestreiften Extraktionslösungsmittels für die anschliessende Wiederverwendung.

15. Verfahren gemäß den Ansprüchen 1 oder 7, wobei das in organischem Medium lösliche Phosphinsäuresalz ausgewählt ist aus Alkalimetallsalzen, Ammoniumsalzen, Nickelsalzen und Tetrabutylammoniumsalzen.

16. Verfahren gemäß den Ansprüchen 1 oder 7, wobei die angewandte Extraktionstechnik ausgewählt ist aus Flüssig-Flüssig-Extraktion, Extraktion durch gepackte Betten von auf Trägern aufgebrachten Reagenzien, Flüssigmembranextraktion und selektiver Extraktion mit gestützter Membran.

## Revendications

1. Procédé pour l'extraction de cobalt-II hors d'une solution aqueuse contenant du cobalt-II et du nickel-II, par mise en contact de ladite solution, ayant un pH d'équilibre d'au moins 3, avec un agent d'extraction comprenant du 1,3,5 - dioxaphosphorine - 2,4,6 - triisopropyl - 5 - hydroxy - 5 - oxyde ou un acide phosphinique soluble dans des solvants organiques, contenant au moins 6 atomes de carbone et ayant la formule générale

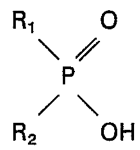

dans laquelle $R_1$ et $R_2$ sont chacun un groupe alkyle, alcoxyalkyle, cycloalkyle ou alkylcycloalkyle, ou un sel de celui-ci soluble dans des solvants organiques.

2. Procédé selon la revendication 1, dans lequel la solution contenant du cobalt-II a un pH d'équilibre d'environ 4 à 6 et l'extraction a lieu à une température dans la plage de 0 à 80°C.

3. Procédé selon la revendication 2, dans lequel le pH est 4,5±0,5 et la température est 20—70°C.

4. Procédé selon la revendication 2, dans lequel l'acide phosphinique soluble dans des solvants organiques est l'acide dicyclohexylphosphinique.

5. Procédé selon la revendication 2, dans lequel l'acide phosphinique soluble dans des solvants organiques est l'acide 2,4,4-triméthylpentyl-cyclohexylphosphinique.

6. Procédé selon la revendication 2, dans lequel l'acide phosphinique soluble dans des solvants organiques est l'acide di-2,4,4-triméthylpentylphosphinique.

7. Procédé selon la revendication 1, caractérisé en ce que l'agent d'extraction comprend d'environ 2 à 99 parties en volume de l'acide phosphinique ou d'un sel de celui-ci, soluble dans des solvants organiques, et d'environ 98 parties à 1 partie en volume d'un diluant organique non miscible à l'eau, et de 0 à environ 15 parties en volume d'un modificateur de phases.

8. Procédé selon la revendication 7, dans lequel on utilise d'environ 0,05 à environ 20 parties en volume de la solution aqueuse par partie en volume du solvant d'extraction.

9. Procédé selon la revendication 7, dans lequel on utilise d'environ 1,0 à 10 parties en volume de la solution aqueuse par partie en volume du solvant d'extraction.

10. Procédé selon la revendication 7, comportant les étapes supplémentaires de mise en contact du solvant d'extraction, chargé de cobalt-II, avec une solution aqueuse d'un acide minéral aux environs de 0—80°C, pour faire passer le cobalt-II dans la phase aqueuse; de séparation de la phase aqueuse contenant du cobalt-II; et de récupération du solvant d'extraction démétallisé pour une réutilisation ultérieure.

11. Procédé selon la revendication 7, dans lequel l'acide minéral est une solution aqueuse d'acide sulfurique contenant environ 10—200 g d'acide sulfurique par litre de solution.

12. Procédé selon la revendication 7, comportant les étapes supplémentaires de mise en contact du solvant d'extraction, chargé de cobalt-II, avec une solution aqueuse d'un sel de cobalt II d'un acide minéral, aux environs de 0—80°C, pour faire passer le nickel-II, extrait simultanément, hors du solvant chargé dans la phase aqueuse; de séparation de la phase aqueuse d'avec le solvant d'extraction chargé de cobalt-II; et de récupération du solvant d'extraction purifié, chargé de cobalt-II.

13. Procédé selon la revendication 12, dans lequel ladite solution aqueuse d'un sel de colbat II d'un acide minéral contient du sulfate de cobalt, du nitrate de cobalt ou du chlorure de cobalt.

14. Procédé selon la revendication 12, comportant les étapes supplémentaires de mise en contact du solvant d'extraction, chargé de cobalt-II, avec une solution aqueuse d'un acide minéral aux environs de 0—80°C, pour faire passer le cobalt-II dans la phase aqueuse; de séparation de la phase aqueuse contenant du cobalt-II; et de récupération du solvant d'extraction démétallisé, pour une réutilisation ultérieure.

15. Procédé selon les revendications 1 ou 7, dans lequel le sel d'acide phosphinique soluble dans des solvants organiques est choisi parmi des sels de métaux alcalins, des sels d'ammonium, des sels de nickel et des sels de tétrabutylammonium.

16. Procédé selon les revendications 1 ou 7, dans lequel la technique d'extraction utilisée est choisi parmi l'extraction liquide-liquide, l'extraction à travers des lits garnis de réactifs fixés sur un support, l'extraction sur membrane liquide et l'extraction sur membrane sélective fixée sur un support.